# EUROPEAN PATENT SPECIFICATION

(11) **EP 1 417 569 B1**
(45) Date of publication and mention of the grant of the patent: **01.03.2006**
(21) Application number: 02718410.0
(22) Date of filing: 03.05.2002
(51) Int. Cl.: G06F 9/44

(54) **METHOD, APPARATUS, AND PROGRAM FOR DISPLAYING MESSAGES**
VERFAHREN, VORRICHTUNG UND PROGRAMM ZUM ANZEIGEN VON NACHRICHTEN
PROCEDE, APPAREIL ET PROGRAMME D'AFFICHAGE DE MESSAGES

(30) Priority: 24.05.2001 US 864119
(43) Date of publication of application: 12.05.2004
(73) Proprietor: International Business Machines Corporation, Armonk, NY 10504 (US)
(72) Inventor: KUIKEN, David, Paul, Round Rock, TX 78681 (US); SMITH, Richard, John, Round Rock, TX 78681 (US)
(74) Representative: Williams, Julian David
(86) International application number: PCT/GB2002/002069
(87) International publication number: WO 2002/097614

(56) References cited:
- US-A- 6 069 624
- D'ARIELLI L: "A MESSAGE MANAGEMENT SYSTEM FOR PERSONAL COMPUTERS" IBM SYSTEMS JOURNAL, IBM CORP. ARMONK, NEW YORK, US, vol. 28, no. 3, 1989, pages 479-493, XP000066331 ISSN: 0018-8670
- "OPERATOR INTERVENTION MESSAGE MANAGEMENT FOR TAPE DRIVE DISPLAYS" IBM TECHNICAL DISCLOSURE BULLETIN, IBM CORP. NEW YORK, US, vol. 37, no. 6B, 1 June 1994 (1994-06-01), pages 499-501, XP000456077 ISSN: 0018-8689

## Description

### BACKGROUND OF THE INVENTION

### 1. Technical Field:

The present invention relates to data processing and, in particular, method, apparatus, and program for displaying messages.

### 2. Description of Related Art:

Computer systems, from general purpose computers to large mainframes, may be used to monitor information. As such, a computer system may be configured to receive text messages describing an event and to display these messages in a text field. Typically, the messages are displayed in ascending or descending chronological order in a scrolling text field. For example, when displayed in ascending order, a new message may be concatenated at the bottom of the text field and the text field may or may not be automatically scrolled to the bottom to display the new message.

Similarly, messages can be ordered by some other criterion. For example US Patent 6,069,624 discloses a message management system for a user interface of a multifunctional printing system which displays messages based on a priority.

This method of displaying messages is helpful when chronology is most important. However, associations between messages are easily missed. For example, a guard may be monitoring events in a building. A message about a door opening on the third level may be immediately followed by a message about a door closing on the eighth level. For each event, the guard must search and scroll for related events, such as the last time the same door on the third level was used or when the door on the eighth level was opened. Often, a new message will cause the text field to refresh, causing the new message to display at the top or bottom of the field as appropriate, before the user is able to locate a single related message.

Therefore, it would be advantageous to provide an improved mechanism for sequencing text messages and scrolling in a text field.

### SUMMARY OF THE INVENTION

This need is met by the invention claimed in the appended claims. An embodiment of the present invention adds text in a display area based on relational importance. Each message is coded with an identification. The message is added to the display area based on previous identifications and displayed. The messages are categorized and sorted first by identification and then by chronology. Messages may be displayed in ascending or descending order with respect to both the identification and the time order of the messages. If the identification dictates that the message is to be added between two existing entries, a space for the new message is made between related entries in the display area, and the new message is added. Messages may also include a sub identification for more defined relationships. Furthermore, a message may be text or other media, such as sound, image, or video.

### BRIEF DESCRIPTION OF THE DRAWINGS

An embodiment of the invention will now be described with reference to the accompanying drawings, wherein:
**Figure 1** depicts a pictorial representation of a network of data processing systems in which the present invention may be implemented;
**Figure 2** is a block diagram of a data processing system that may be implemented as a server in accordance with a preferred embodiment of the present invention;
**Figure 3** is a block diagram illustrating a data processing system in which the present invention may be implemented;
**Figure 4** is a block diagram of a monitoring computer in accordance with a preferred embodiment of the present invention;
**Figures 5A-5D** depict exemplary text fields in accordance with a preferred embodiment of the present invention;
**Figure 6** illustrates an example of a sequenced message text field in accordance with a preferred embodiment of the present invention;
**Figure 7** illustrates an example of distributed and sequenced messages in accordance with a preferred embodiment of the present invention; and
**Figure 8** is a flowchart of the operation of a process for sequencing and scrolling a message in accordance with a preferred embodiment of the present invention.

### DETAILED DESCRIPTION OF THE PREFERRED EMBODIMENT

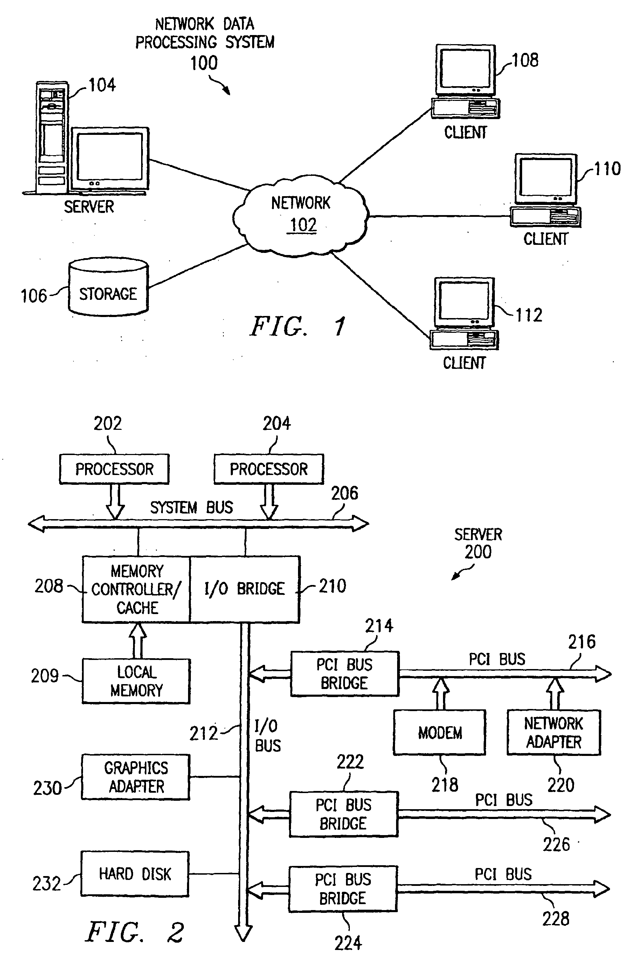

With reference now to the figures, **Figure 1** depicts a pictorial representation of a network of data processing systems in which the present invention may be implemented. Network data processing system **100** is a network of computers in which the present invention may be implemented. Network data processing system **100** contains a network **102**, which is the medium used to provide communications links between various devices and computers connected together within network data processing system **100**. Network **102** may include connections, such as wire, wireless communication links, or fiber optic cables.

In the depicted example, server **104** is connected to network **102** along with storage unit **106**. In addition, clients **108, 110,** and **112** are connected to network **102**. These clients **108, 110,** and **112** may be, for example, personal computers or network computers. In the depicted example, server **104** provides data, such as boot files, operating system images, and applications to clients **108-112**. Clients **108, 110,** and **112** are clients to server **104**. Network data processing system **100** may include additional servers, clients, and other devices not shown. In the depicted example, network data processing system **100** is the Internet with network **102** representing a worldwide collection of networks and gateways that use the TCP/IP suite of protocols to communicate with one another. At the heart of the Internet is a backbone of high-speed data communication lines between major nodes or host computers, consisting of thousands of commercial, government, educational and other computer systems that route data and messages. Of course, network data processing system **100** also may be implemented as a number of different types of networks, such as for example, an intranet, a local area network (LAN), or a wide area network (WAN). **Figure 1** is intended as an example, and not as an architectural limitation for the present invention.

In accordance with a preferred embodiment of the present invention, at least one computer system monitors events by receiving messages. For example, each one of clients **108, 110, 112** may monitor events and server **104** may receive messages describing these events from the clients. Alternatively, server **104** may receive data from a surveillance system (not shown) and relay messages to clients **108, 110, 112**. In another embodiment, one of the clients may be monitoring events occurring in a database, which may be storage **106**. Also, any one of server **104** and clients **108, 110, 112** may receive event messages from an outside source through network **102** or through data ports, such as a serial or parallel port.

Referring to **Figure 2**, a block diagram of a data processing system that may be implemented as a server, such as server 104 in Figure 1, is depicted in accordance with a preferred embodiment of the present invention. Data processing system **200** may be a symmetric multiprocessor (SMP) system including a plurality of processors **202** and **204** connected to system bus **206**. Alternatively, a single processor system may be employed. Also connected to system bus **206** is memory controller/cache **208**, which provides an interface to local memory **209**. I/O bus bridge **210** is connected to system bus **206** and provides an interface to I/O bus **212**. Memory controller/cache **208** and I/O bus bridge **210** may be integrated as depicted.

Peripheral component interconnect (PCI) bus bridge **214** connected to I/O bus **212** provides an interface to PCI local bus **216**. A number of modems may be connected to PCI local bus **216**. Typical PCI bus implementations will support four PCI expansion slots or add-in connectors. Communications links to network computers **108-112** in **Figure 1** may be provided through modem **218** and network adapter **220** connected to PCI local bus **216** through add-in boards.

Additional PCI bus bridges **222** and **224** provide interfaces for additional PCI local buses **226** and **228**, from which additional modems or network adapters may be supported. In this manner, data processing system **200** allows connections to multiple network computers. A memory-mapped graphics adapter **230** and hard disk **232** may also be connected to I/O bus **212** as depicted, either directly or indirectly.

Those of ordinary skill in the art will appreciate that the hardware depicted in **Figure 2** may vary. For example, other peripheral devices, such as optical disk drives and the like, also may be used in addition to or in place of the hardware depicted. The depicted example is not meant to imply architectural limitations with respect to the present invention.

The data processing system depicted in **Figure 2** may be, for example, an IBM e-Server pSeries system, a product of International Business Machines Corporation in Armonk, New York, running the Advanced Interactive Executive (AIX) operating system or LINUX operating system.

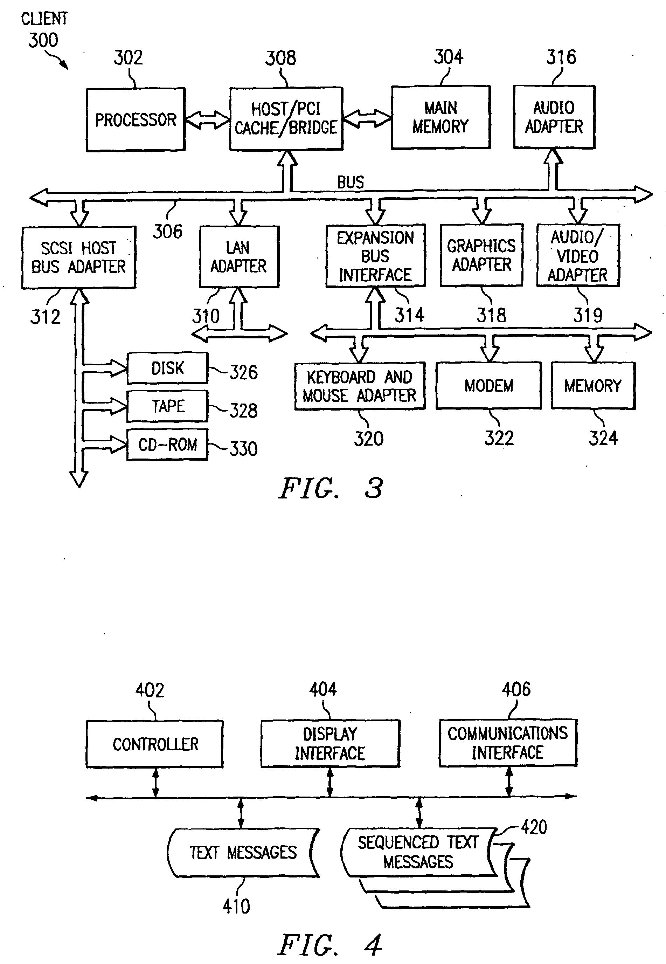

With reference now to **Figure 3**, a block diagram illustrating a data processing system is depicted in which the present invention may be implemented. Data processing system **300** is an example of a client computer. Data processing system **300** employs a peripheral component interconnect (PCI) local bus architecture. Although the depicted example employs a PCI bus, other bus architectures such as Accelerated Graphics Port (AGP) and Industry Standard Architecture (ISA) may be used. Processor **302** and main memory **304** are connected to PCI local bus 306 through PCI bridge **308**. PCI bridge **308** also may include an integrated memory controller and cache memory for processor **302**. Additional connections to PCI local bus **306** may be made through direct component interconnection or through add-in boards. In the depicted example, local area network (LAN) adapter **310**, SCSI host bus adapter **312**, and expansion bus interface **314** are connected to PCI local bus **306** by direct component connection. In contrast, audio adapter **316**, graphics adapter **318**, and audio/video adapter **319** are connected to PCI local bus **306** by add-in boards inserted into expansion slots. Expansion bus interface 314 provides a connection for a keyboard and mouse adapter **320**, modem **322**, and additional memory **324**. Small computer system interface (SCSI) host bus adapter **312** provides a connection for hard disk drive **326**, tape drive **328**, and CD-ROM drive **330**. Typical PCI local bus implementations will support three or four PCI expansion slots or add-in connectors.

An operating system runs on processor **302** and is used to coordinate and provide control of various components within data processing system **300** in **Figure 3**. The operating system may be a commercially available operating system, such as Windows 2000, which is available from Microsoft Corporation. An object oriented programming system such as Java may run in conjunction with the operating system and provide calls to the operating system from Java programs or applications executing on data processing system **300**. "Java" is a trademark of Sun Microsystems, Inc. Instructions for the operating system, the object-oriented operating system, and applications or programs are located on storage devices, such as hard disk drive **326**, and may be loaded into main memory **304** for execution by processor 302.

Those of ordinary skill in the art will appreciate that the hardware in **Figure 3** may vary depending on the implementation. Other internal hardware or peripheral devices, such as flash ROM (or equivalent nonvolatile memory) or optical disk drives and the like, may be used in addition to or in place of the hardware depicted in **Figure 3**. Also, the processes of the present invention may be applied to a multiprocessor data processing system.

As another example, data processing system **300** may be a stand-alone system configured to be bootable without relying on some type of network communication interface, whether or not data processing system **300** comprises some type of network communication interface. As a further example, data processing system **300** may be a Personal Digital Assistant (PDA) device, which is configured with ROM and/or flash ROM in order to provide non-volatile memory for storing operating system files and/or user-generated data.

The depicted example in **Figure 3** and above-described examples are not meant to imply architectural limitations. For example, data processing system **300** also may be a notebook computer or hand held computer in addition to taking the form of a PDA. Data processing system **300** also may be a kiosk or a Web appliance.

Referring now to **Figure 4**, a block diagram of a monitoring computer is shown in accordance with a preferred embodiment of the present invention. The monitoring computer is controlled by controller **402**. The monitoring computer may receive event messages, such as text messages, through communications interface **406**. The communications interface may be a keyboard or mouse interface, a data port, a network interface or modem, or any other interface for receiving data. Text messages may be stored in text messages data storage **410** and displayed through display interface **404**. Text message data storage **410** may be temporary working memory or may be permanent storage.

In accordance with a preferred embodiment of the present invention, each text message has an associated identification (ID). Text messages may also have an associated sub ID for more defined categorization of messages. Controller **402** sequences the text messages by ID and sub ID and stores the sequenced text messages in sequenced text message data storage **420**. The sequenced text message data storage may be temporary memory for display of the text field or may be permanent storage. Text message data storage **410** and sequenced text message data storage **420** may reside in the same memory or data storage device or may reside in separate memory or data storage devices.

The sequenced text messages may then be displayed through display interface **404**. Preferably, the sequenced text messages are displayed in a single text field. However, text messages **410** and sequenced text messages **420** may be displayed in separate text fields simultaneously. In addition, text messages **410** may be categorized into multiple instances of sequenced text messages **420**. For example, text messages may be categorized into separate text fields by ID and sequenced within each text field by sub ID. Furthermore, the separate instances of sequenced text messages may be distributed to and displayed by other monitoring computers.

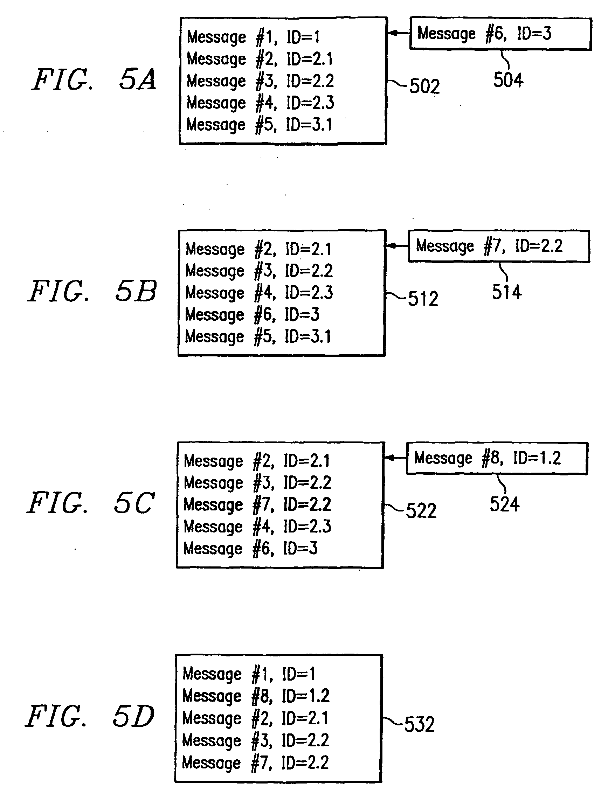

With reference now to **Figures 5A-5D**, exemplary text fields are shown in accordance with a preferred embodiment of the present invention. In particular, with reference to **Figure 5A**, text field **502** displays a series of messages, namely Message #1, Message #2, Message #3, Message #4, and Message #5. Message #6, message **504**, is received and has an ID of 3.

The ID is associated with the message. For example, the ID may be stored in a header of the text message. Alternatively, the ID may be appended to the beginning or end of the text message. The ID and/or sub ID may also be identified by parsing the text message for key words, numbers, or phrases. For example, a server in a computer network may receive a message from a managed computer regarding a printer error. The server may then determine an ID associating the message with the particular computer from which the message is received and a sub ID associating the message with the type of message (i.e. printer error). Thus, the ID and sub ID may be associated with the message at the time the event is detected and the message is generated or at the time the message is received by the monitoring computer. The ID and sub ID may then be appended to the text message for display to allow the viewer to quickly associate related text messages.

Turning to **Figure 5B**, Message #6 is displayed in text field **512** after Message #4 and before Message #5, because Message #4 has an ID of 2 and Message #5 has an ID of 3. Message #6 is placed before Message #5 because Message #6 does not have a sub ID and Message #5 has a sub ID of 1. Message #1 is not visible in text field 512; however, the text field may include a scroll bar to allow the user to navigate to messages that are not shown. Message #7, message 514, is received and has an ID of 2 and a sub ID of 2.

As shown in Figure 5C, Message #7 is displayed in text field **522** after Message #3 and before Message #4 based on ID and sub ID. Message #7 is displayed after Message #3 because they have same ID and sub ID, but Message #7 came after Message #3 with respect to time.

In accordance with a preferred embodiment of the present invention, the text field is scrolled such that the newest message is visible. Preferably, the message is centered in the text field or displayed at the top or bottom of the field so that the related messages are also visible. Message #8, message 524, is received and has an ID of 1 and a sub ID of 2.

Next, with reference to **Figure 5D**, Message #8 is displayed in text field **532** after Message #1 and before Message #2 based on ID and sub ID. As each message is received and displayed, the newest message may be emphasized with different text properties, such as color or bold typeface. Thus, a viewer may quickly see an association between each new message and previous related messages.

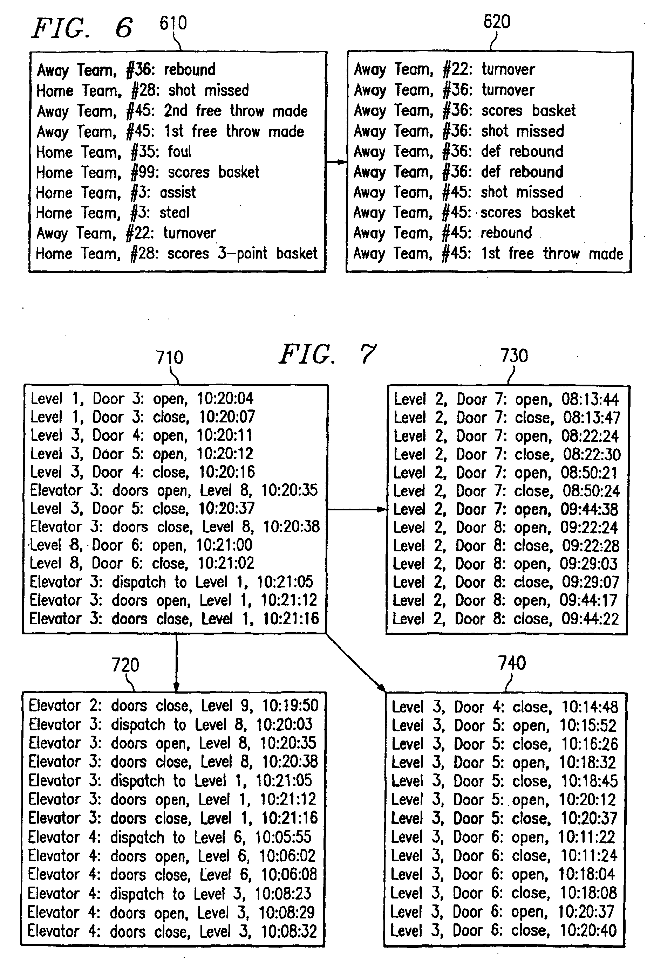

With reference now to **Figure 6**, an example of a sequenced message text field is shown in accordance with a preferred embodiment of the present invention. In particular, text field **610** displays events occurring in a basketball game. This example may be useful for a television commentator to see events sequenced by team and player number. Thus, when a player gets a rebound, the television commentator may quickly see that the player has gotten two consecutive defensive rebounds.

The event text messages in text field **610** are displayed in descending chronological order. In other words, the most recent event is concatenated on the top of the text field. The text messages may also have an associated time code. In the example of a basketball game, the time code may include the quarter of play and the amount of time remaining in the quarter. In this specific example, text messages have an associated team ID and player number sub ID. For example, the most recent text message, shown in bold print, has a team ID of "Away Team" and a sub ID of "#36."

Text field **620** shows the text messages sequenced by ID and sub ID. For example, the most recent text message is placed after the last previous message with an ID of "Away Team" and a sub ID of "#36," thus placing the messages with the same ID and sub ID in ascending chronological order. As seen in text field **620**, player #36 on the away team committed a turnover, scored a basket, missed a shot, and got two successive defensive rebounds.

Turning now to **Figure 7**, an example of distributed and sequenced messages is illustrated in accordance with a preferred embodiment of the present invention. In particular, text field **710** displays events occurring in a building. This example may be useful for a security force to see events sequenced by level, door, elevator, etc. Thus, a security guard may analyze the messages to discover patterns, such as whether a door is repeatedly opened or open for a long period of time.

The event text messages in text field **710** are displayed in ascending chronological order. In other words, the most recent event is concatenated on the bottom of the text field. The text messages also have an associated time code. In this specific example, text messages may have an associated ID and sub ID. For example, the most recent text message, shown in bold print, has an ID of "Elevator 3" and no sub ID. Alternatively, the most recent text message may have an ID of "Level 1" and a sub ID of "Elevator 3," depending upon the implementation. IDs and sub IDs may be inserted within the message itself or encoded and attached to the message in a header or the like.

Messages in text field **710** are distributed to separate text fields based on ID. Text field **720** displays messages with IDs that indicate an elevator, such as "Elevator 3." Text field **730** displays messages with an ID of "Level 2." Also, text field **740** displays messages with an ID of "Level 3." The manner in which messages are distributed between text fields may depend on the implementation. Furthermore, text fields **710, 720, 730, 740** may be displayed on the same display or distributed between monitoring computers. For example, a guard on level two of a building may view text field **730** using a monitoring computer on level two while a guard on level three of the building views text field **740** using a monitoring computer on level three.

In an alternative embodiment, messages may comprise information other than text. For example, messages may comprise recorded sound, still images, or video. As a specific example, messages may include an image captured from a traffic camera. A monitoring computer may receive traffic images and sequence them according to location. As another example, a dispatcher at a police station may receive sound messages from officers on patrol. The monitoring computer may play the sound and display a representation of the sound in relation to previous messages by the same officer. The dispatcher may then select sounds to be played from previous messages to retrace events.

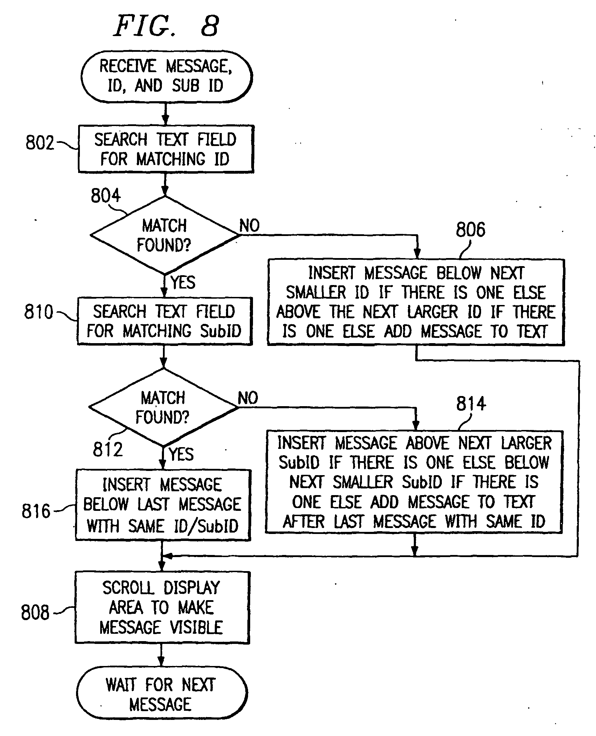

With reference to **Figure 8**, a flowchart of the operation of a process for sequencing and scrolling a message is shown in accordance with a preferred embodiment of the present invention. The process begins by receiving a message, ID and sub ID. As stated above, the ID and sub ID may be extracted from the message or a message header. The ID and sub ID may also be identified by parsing the message for key words, numbers, or phrases. The process then searches the text field for a matching identification (step **802**). A determination is made as to whether a match is found (step **804**). If a match is not found, the process inserts the message below the message with the next smaller identification, if there is one. Otherwise, the process inserts the message above the message with the next larger identification, if there is one. Otherwise, the process inserts the message into the text field (step **806**) and scrolls the display area to make the message visible (step **808**).

If a match is found in step **804**, the process searches the text field for a message with a matching sub identification (step **810**) and a determination is made as to whether a match is found (step **812**). If a match is not found, the process inserts the message above the message with the next larger sub identification, if there is one. Otherwise, the process inserts the message below the message with the next smaller sub identification, if there is one. Otherwise, the process inserts the message above the message with the same identification and the smallest sub identification (step **814**) and proceeds to step **808** to scroll the display area to make the message visible.

If a match is found in step **812**, the process inserts the message below the last message with the same identification and sub identification (step **816**) and proceeds to step **808** to scroll the display area to make the message visible. After scrolling the display area, the process ends and waits for the next message.

The process shown in **Figure 8** may be implemented in hardware or software. The flowchart illustrates-sequencing messages with an identification and a sub identification in ascending chronological order. However, the flowchart may be modified depending upon the implementation. For example, the flowchart may be modified to place messages in descending order. The flowchart may also be modified for fewer or more sub identifications. Ascending order is presented herein from top to bottom to be consistent with the English writing system. However, other conventions may be used. For example, ascending or chronological order may be presented from left to right or from bottom to top, depending upon the desired orientation.

Thus, the present invention solves the disadvantages of the prior art by providing a mechanism for sequencing messages according to an identification and/or a sub identification. A user may view a most recent message in association with related previous messages. Thus, the viewer may monitor events without having to scroll and search for related messages. The present invention may also be used to sequence messages as they are compiled into a document. For example, an ordering system may sequence messages in the order according to category or identification rather than chronological order. Thus, a user may order a pair of shoes and a message indicating the product code, description, and price may be inserted into the order after a message for other shoes being purchased.

It is important to note that while the present invention has been described in the context of a fully functioning data processing system, those of ordinary skill in the art will appreciate that the processes of the present invention are capable of being distributed in the form of a computer readable medium of instructions and a variety of forms and that the present invention applies equally regardless of the particular type of signal bearing media actually used to carry out the distribution. Examples of computer readable media include recordable-type media, such as a floppy disk, a hard disk drive, a RAM, CD-ROMs, DVD-ROMs, and transmission-type media, such as digital and analog communications links, wired or wireless communications links using transmission forms, such as, for example, radio frequency and light wave transmissions. The computer readable media may take the form of coded formats that are decoded for actual use in a particular data processing system.

The description of the present invention has been presented for purposes of illustration and description, and is not intended to be exhaustive or limited to the invention in the form disclosed. Many modifications and variations will be apparent to those of ordinary skill in the art. The embodiment was chosen and described in order to best explain the principles of the invention, the practical application, and to enable others of ordinary skill in the art to.understand the invention for various embodiments with various modifications as are suited to the particular use contemplated.

## Claims

1. A method for generating a message display, comprising:
receiving a message (504), wherein the message has associated therewith an identifier;
inserting the message into a field (502), wherein the message is inserted based on the identifier; and
presenting the field,
**characterised in that** the method comprises parsing the message (504) to derive the identifier; and
automatically scrolling the field so that the message is visible.

2. The method of claim 1, wherein the step of inserting the message into the field comprises inserting the message into the field in ascending or descending order based on the identifier.

3. The method of claim 1, wherein the step of inserting the message into the field coniprises inserting the message after a previous message with the same identifier, whereby messages with the same identifier appear in chronological order.

4. The method of claim 1, wherein the step of inserting the message into the field comprises inserting the message before a previous message with the same identifier, whereby messages with the same identifier appear in reverse chronological order.

5. The method of claim 1, wherein the identifier comprises an identification and a sub identification.

6. The method of claim 1. wherein the message comprises a text message and the field is a text field.

7. The method of claim 6, wherein the step of parsing the message includes parsing the text message for key words, numbers or phrases.

8. The method of claim 1, wherein the message includes at least one of sound data, image data, and video data.

9. An apparatus (300) for generating a message display comprising:
receipt means (406) for receiving a message, wherein the message has associated therewith an identifier;
insertion means (402) for inserting the message into a field (502) based on the identifier; and
presentation means (404) for presenting the field,
**characterised in that** the method comprises parsing means for parsing the message (504) to derive the identifier: and
scrolling means for automatically scrolling the field so that the message is visible.

10. A computer program product consisting of a computer readable medium bearing computer program code as claimed in claim 1, for generating a message display, comprising:
instructions for receiving a message (504), wherein the message has associated therewith an identifier;
instructions for inserting the message into the field (502) based on the identifier; and
instructions for presenting the field,
**characterised in that** the computer program product further comprises instructions for parsing the message (504) to derive the identifier; and
instructions for automatically scrolling the field so that the message is visible.

## Patentansprüche

1. Verfahren für die Erzeugung einer Nachrichtenanzeige, das Folgendes umfasst:
Empfangen einer Nachricht (504), wobei der Nachricht ein Bezeichner zugehörig ist;
Einfügen der Nachricht in ein Feld (502), wobei die Nachricht auf der Grundlage des Bezeichners eingefügt wird; und
Anzeigen des Felds,
**dadurch gekennzeichnet, dass** das Verfahren das syntaktische Analysieren der Nachricht (504) umfasst, um so den Bezeichner abzuleiten; und
das Durchführen eines automatischen Bildlaufs durch das Feld umfasst, so dass die Nachricht sichtbar ist.

2. Verfahren nach Anspruch 1, wobei der Schritt des Einfügens der Nachricht in das Feld das Einfügen der Nachricht in das Feld auf der Grundlage des Bezeichners in aufsteigender oder absteigender Reihenfolge umfasst.

3. Verfahren nach Anspruch 1, wobei der Schritt des Einfügens der Nachricht in das Feld das Einfügen der Nachricht nach einer vorhergehenden Nachricht mit dem gleichen Bezeichner umfasst, wobei Nachrichten mit dem gleichen Bezeichner in zeitlicher Reihenfolge erscheinen.

4. Verfahren nach Anspruch 1, wobei der Schritt des Einfügens der Nachricht in das Feld das Einfügen der Nachricht vor einer vorhergehenden Nachricht mit dem gleichen Bezeichner umfasst, wobei Nachrichten mit dem gleichen Bezeichner in umgekehrter zeitlicher Reihenfolge erscheinen.

5. Verfahren nach Anspruch 1, wobei der Bezeichner eine Kennung und eine Teilkennung umfasst.

6. Verfahren nach Anspruch 1, wobei die Nachricht eine Textnachricht umfasst und das Feld ein Textfeld ist.

7. Verfahren nach Anspruch 5, wobei der Schritt des syntaktischen Analysierens der Nachricht das syntaktische Analysieren der Textnachricht auf Schlüsselwörter, Ziffern oder Wortverbindungen beinhaltet.

8. Verfahren nach Anspruch 1, wobei die Nachricht mindestens Klangdaten, Bilddaten oder Videodaten beinhaltet.

9. Vorrichtung (300) für die Erzeugung einer Nachrichtenanzeige, die Folgendes umfasst:
ein Empfangsmittel (406) für das Empfangen einer Nachricht, wobei der Nachricht ein Bezeichner zugehörig ist;
ein Einfügemittel (402) für das Einfügen der Nachricht in ein Feld (502) auf der Grundlage des Bezeichners; und
ein Anzeigemittel (404) für das Anzeigen des Felds,
**dadurch gekennzeichnet, dass** das Verfahren syntaktische Analysemittel für das syntaktische Analysieren der Nachricht (504) umfasst, um so den Bezeichner abzuleiten; und
ein Bildlaufmittel für das Durchführen eines automatischen Bildlaufs durch das Feld umfasst, so dass die Nachricht sichtbar ist.

10. Computerprogrammprodukt, das aus einem computerlesbaren Medium mit Computerprogrammcode nach Anspruch 1 besteht, für die Erzeugung einer Nachrichtenanzeige, das Folgendes umfasst:
Befehle für das Empfangen einer Nachricht (504), wobei der Nachricht ein Bezeichner zugehörig ist;
Befehle für das Einfügen der Nachricht in das Feld (502) auf der Grundlage des Bezeichners; und
Befehle für das Anzeigen des Felds,
**dadurch gekennzeichnet, dass** das Computerprogrammprodukt weiter Befehle für das syntaktische Analysieren der Nachricht (504) umfasst, um so den Bezeichner abzuleiten; sowie
Befehle für das Durchführen eines automatischen Bildlaufs durch das Feld umfasst, so dass die Nachricht sichtbar ist.

## Revendications

1. Procédé pour générer l'affichage d'un message, comprenant :
la réception d'un message (504), dans lequel un identifieur est associé au message ;
l'insertion du message dans un champ (502), dans lequel le message est inséré en fonction de l'identifieur ; et
la présentation du champ,
**caractérisé en ce que** le procédé comprend l'analyse syntaxique du message (504) pour en dériver l'identifieur ; et
le défilement automatique du champ de façon que le message soit visible.

2. Procédé selon la revendication 1, dans lequel l'étape d'insertion du message dans le champ comprend l'insertion du message dans le champ par ordre ascendant ou descendant, en fonction de l'identifieur.

3. Procédé selon la revendication 1, dans lequel l'étape d'insertion du message dans le champ comprend l'insertion du message après un message précédent ayant le même identifieur, ce par quoi les messages ayant le même identifieur apparaissent par ordre chronologique.

4. Procédé selon la revendication 1, dans lequel l'étape d'insertion du message dans le champ comprend l'insertion du message avant un message précédent avec le même identifieur, ce par quoi le message avec le même identifieur apparaît dans l'ordre chronologique inverse.

5. Procédé selon la revendication 1, dans lequel l'identifieur comprend une identification et une sous-identification.

6. Procédé selon la revendication 1, dans lequel le message comprend un message textuel et le champ est un champ de texte.

7. Procédé selon la revendication 6, dans lequel l'étape d'analyse syntaxique du message inclut l'analyse syntaxique du message de texte pour y rechercher des mots clés, des nombres ou des expressions.

8. Procédé selon la revendication 1, dans lequel le message inclut au moins une donnée de son, d'image ou de vidéo.

9. Appareil (300) pour générer l'affichage d'un message, comprenant :
des moyens de réception (406) pour recevoir un message, dans lequel un identifieur est associé au message ;
des moyens d'insertion (402) pour insérer le message dans un champ (502) en fonction de l'identifieur ; et
des moyens de présentation (404) pour présenter le champ.
**caractérisé en ce que** le procédé comprend des moyens d'analyse syntaxique pour analyser syntaxiquement le message (405) pour en dériver l'identifieur ; et
des moyens de défilement pour faire défiler automatiquement le champ de façon que le message soit visible.

10. Produit de programme informatique composé d'un moyen informatiquement lisible portant un code de programme informatique selon la revendication 1 pour générer l'affichage d'un message, comprenant :
des instructions pour recevoir un message (504) dans lequel un identifieur est associé au message ;
des instructions pour insérer le message dans le champ (502) en fonction de l'identifieur ; et
des instructions pour présenter le champ.
**caractérisé en ce que** le produit de programme informatique comprend en outre des instructions pour analyser syntaxiquement le message (504) pour en dériver l'identifieur ; et
des instructions pour faire défiler automatiquement le champ de façon que le message soit visible.
